# EUROPÄISCHE PATENTSCHRIFT

(11) **EP 1 694 788 B1**
(45) Veröffentlichungstag und Bekanntmachung des Hinweises auf die Patenterteilung: **26.02.2014**
(21) Anmeldenummer: 04803741.0
(22) Anmeldetag: 10.12.2004
(51) Int. Cl.: C09D 127/06, C09D 175/04, C09J 127/06, C09J 175/04, C08K 5/5398, C08G 18/77, B27K 3/15

(54) **VERWENDUNG EINES MITTELS ALS ISOLIERGRUNDIERUNG FÜR HOLZ UND HOLZWERKSTOFFEN**
USE OF AN AGENT AS INSULATING PRIMER FOR WOOD AND DERIVED WOOD PRODUCTS
UTILISATION D'UN AGENT COMME COUCHE DE FOND ISOLANTE POUR BOIS ET DES MATERIAUX DERIVES DU BOIS

(30) Priorität: 12.12.2003 DE 10358667
(43) Veröffentlichungstag der Anmeldung: 30.08.2006
(73) Patentinhaber: Votteler Lackfabrik GmbH & Co. KG, 70825 Korntal-Münchingen (DE)
(72) Erfinder: VOTTELER, Dietmar, 70825 Korntal-Münchingen (DE); SENTKO, Jörg, 70825 Korntal-Münchingen (DE); UNKEL, Gerd, 70825 Korntal-Münchingen (DE)
(74) Vertreter: Mammel, Ulrike
(86) Internationale Anmeldenummer: PCT/EP2004/014096
(87) Internationale Veröffentlichungsnummer: WO 2005/056703

(56) Entgegenhaltungen:
- WO-A-00/47687
- DE-B- 1 131 001
- DATABASE CA [Online] CHEMICAL ABSTRACTS SERVICE, COLUMBUS, OHIO, US; XP002326967 gefunden im STN Database accession no. 105:44545 & JP 61 007344 A2 (TOYO SODA MFG. CO., LTD., JAPAN) 14. Januar 1986 (1986-01-14)
- DATABASE CA [Online] CHEMICAL ABSTRACTS SERVICE, COLUMBUS, OHIO, US; XP002326968 gefunden im STN Database accession no. 113:154455 & JP 02 138190 A2 (NIPPON KAYAKU CO., LTD., JAPAN) 28. Mai 1990 (1990-05-28)

## Beschreibung

Die vorliegende Erfindung betrifft die Verwendung eines Mittels zur Isoliergrundierung für Holz, Holzwerkstoffe, Furniere. Holzfurniere, insbesondere Edelholzfurniere, werden zur Herstellung von Zierteilen bei der Innenausstattung von Fahrzeugen eingesetzt. Für die Herstellung dieser Zierteile werden die Holzfurniere zunächst gebleicht und/oder gebeizt und/oder gefärbt und/oder auf sonstige Weise farblich verändert. Die farblich vorbereiteten Furniere werden anschließend mit einem Isoliergrund versehen.

Im Allgemeinen dient der Isoliergrund dazu, die Farbmittel und Holzinhaltsstoffe im Holz zu fixieren und zu verankern, d.h. ein Ausbluten dieser Stoffe aus dem Holz zu verhindern. Eine wesentliche Aufgabe des Isoliergrunds ist somit, eine sperrende Wirkung entfalten, so dass störende Holzinhaltsstoffe in der nachfolgenden Beschichtung hinsichtlich ihrer chemischen Härtung oder sonstiger Eigenschaften keinen negativen Einfluss ausüben können.

Eine weitere wesentliche Aufgabe des Isoliergrundes besteht darin, die Haftung zwischen dem Holz einerseits und der späteren Lack- oder Kunststoffschicht andererseits zu vermitteln. Gleichzeitig ist jedoch für den Isoliergrund von entscheidender Bedeutung, dass eine schnelle physikalische Antrocknung erreicht wird, um ein Haften von Staubpartikeln an der Oberfläche und damit eine Beeinträchtigung der Optik zu verhindern.

Darüber hinaus muss der Isoliergrund auch die Fähigkeit zur Porenbenetzung besitzen, da eine Nichtbenetzung einer Holzpore durch nachfolgende transparente Lackfilme optisch erkennbar wäre und das Nachfall-Verhalten des gesamten Lackaufbaus negativ beeinflussen würde. Der Isoliergrund muss deshalb selbst bei sehr schwer zugänglichen Poren eine hinreichende Benetzbarkeit aufweisen. Weiterhin sollte der Isoliergrund die vorhandene Luft aus den Poren verdrängen.

Eine weitere wesentliche Anforderung an einen Isoliergrund ist der gleichmäßige Filmauftrag, insbesondere bei der Spritzapplikation, da das Überlackierfenster, die Entschäumung und Trocknung auch von der Filmstärke abhängen. Hierzu ist die Formulierung eines ausgewogenen Lösemittelhaushalts mit entsprechender Verdunstungskurve notwendig, um einen gleichmäßigen Filmauftrag zu ermöglichen und damit dem Anspruch einer guten Entschäumung gerecht zu werden.

Im weiteren Fertigungsprozess können farbliche Unterschiede mit Patinierfarbe egalisiert und nochmals Isoliergrund aufgetragen werden, um die Haftvermittlung zwischen Holzteil und Oberflächenlackschicht zu gewährleisten.

Anschließend wird die Oberflächenlackierung oder eine Kunststoffbeschichtung aufgebracht.

In Abhängigkeit von der gewünschten Lackbeschichtung bzw. Kunststoffbeschichtung sind hierfür verschiedene Verfahren möglich:
- Eine mehrschichtige Dickschicht-Oberflächenlackierung kann durch einen mehrfachen Auftrag von Polyesterschichten mit anschließendem Schleifen und Polieren erreicht werden.
- Eine 2-Komponenten Polyurethan-Beschichtung (2K PUR) kann auf das vorbehandelte Furnier in einem Arbeitsgang in einer Hochdruckund/oder Niederdruckreaktionsgießmaschine (RIM: reaction injection molding) erfolgen. Hierfür wird die Form der Hochdruckreaktionsgießmaschine erwärmt (circa 80° C) und das 2K PUR-System injiziert, wobei durch die exotherme Reaktion vorübergehend eine Temperaturerhöhung erfolgt, die - in Abhängigkeit von den Prozessparametern - in der Größenordnung von 140° C liegt.
- Zur Herstellung von kunststoffumspritzten Holzteilen wird das gebeizte und mit dem Isoliergrund versehene geformte und gegebenenfalls stabilisierte Furnierstück bei höheren Temperaturen, die der Fließtemperatur des jeweiligen Thermoplasts angepasst sind und dem entsprechenden Druck zunächst hinter- und anschließend überspritzt. In der Regel beträgt die beim Hinterspritzen herrschende Temperatur circa 140° C bis 220° C und die beim Überspritzen herrschende Temperatur etwa 240° C bis 290° C.

Im Stand der Technik sind 2-Komponenten (2K) Isoliergründe auf Polyurethanbasis bekannt, bei welchen als erste Komponente (Härter) eine NCO-haltige Komponente und als zweite Komponente (Stammlack) eine OH-haltige Komponente eingesetzt wird.

Nachteilig bei den aus dem Stand der Technik bekannten Isoliergründen ist die ungenügende Haftung, die insbesondere bei höheren Verarbeitungstemperaturen beobachtet wird. Teilweise zeigen hierzu die bekannten Isoliergründe auch nur eine ungenügende Porenbenetzung, insbesondere bei Hölzern mit schwer zugänglichen Poren und bei ölhaltigen Hölzern.

Ein weiterer Nachteil der bislang bekannten 2 Komponenten Isoliergründe auf Polyurethanbasis besteht darin, dass sich das Holz bei höheren Prozesstemperaturen, insbesondere in den oben beschriebenen Hinterund Überspritzverfahren und den dortigen Prozesszeiten, stark verfärbt. Dies ist nach den Ergebnissen der Anmelderin voraussichtlich darauf zurückzuführen, dass die Isoliergründe bei den hohen Prozesstemperaturen durch Plastifizierung "weggeschoben" werden, so dass das Holz "verbrennt".

Weiterhin sind aus der DE-B-11 31 001, der Database CA/STN 105:44545 und der WO-A-00/47687 isocyanathaltige Ester der Phosphorsäure oder eines Phosphorsäurederivats umfassende Mittel bekannt. Diese Mittel dienen zum Verkleben von Kautschuk, Leder oder Gummi oder als Schmelzkleber.

Die Aufgabe der vorliegenden Erfindung besteht darin, die Verwendung eines Mittels nach Anspruch 1 als Isoliergrund für Holz, Holzwerkstoffe, Furniere bereitzustellen, das auch bei längeren Einwirkzeiten bei höheren Temperaturen dauerhaft die gewünschte Haftung zeigt, bei dem die unerwünschte Verfärbung des Holzes vermieden wird und das auch auf ölhaltigen Hölzern eine gute Porenbenetzbarkeit zeigt.

Diese Aufgabe wird durch die Merkmale des Anspruchs 1 gelöst.

Erstaunlicherweise wurde festgestellt, dass ein auch bei höheren und hohen Temperaturen gut haftendes Isoliergrundierungsmittel erhalten wird, wenn das Mittel wenigstens einen isocyanathaltigen Ester von Phosphorsäure oder einem Phosphorsäurederivat, insbesondere einem Thiophosphat, umfaßt. Vorzugsweise handelt es sich bei dem isocyanathaltigen Ester um eine Verbindung der Summenformel

[(NCO)ₘ-R-O]ₙ-POₚS_{q}, wobei R eine Aryl-, Alkyl- oder Arylalkylgruppe, ggf. substituiert und n, m, p und q eine ganze Zahl zwischen 0 und 4 ist.

Als Arylgruppe kann beispielsweise eine Phenyl- oder Naphthylgruppe, als Alkylgruppe eine unverzweigte und verzeigte C1 bis C10-Alkylgruppe und als Alkylarylgruppe beispielsweise ein Alkylphenylrest eines C1- bis C10-Alkylrests wie z.B. Toluyl-, eingesetzt werden.

Unter den Thiophosphaten (das heißt q = 1, p = 0) sind die Triisocyanate, d.h. n = 3, besonders bevorzugt. Ebenfalls ist der Einsatz von Phosphaten, d.h. p = 1, q = 0, vorzugsweise der Triisocyanate, d.h. n = 3, möglich. In allen Fällen können die Alkyl-, Aryl- und Alkylarylreste wie vorbeschrieben ausgewählt werden.

Eine besonders gute Haftung des Isoliergrunds kann erreicht werden, wenn als isocyanathaltige Verbindung des Mittels Tris(p-isocyanatophenyl)thiophosphat (d.h. R = Phenyl, m = 1, n = 3, p = 0, q = 1) eingesetzt wird.

Weist das Mittel als Rest R der NCO-haltigen Verbindung nur aliphatische Reste auf, so zeichnet sich das Mittel durch eine besondere Stabilität gegenüber Licht aus.

Der erfindungsgemäße Isoliergrund kann holzartentypisch enge, konische, fasrige, spaltartige und gequetschte Holzporen, die je nach Holzart auch große Anteile an ölartigen oberflächenspannungskritischen Holzinhaltsstoffen aufweisen können, außerordentlich gut benetzen. Der Isoliergrund ist somit selbst auf tropischen Holzarten einsetzbar.

Der erfindungsgemäße Isoliergrund zeichnet sich darüber hinaus dadurch aus, dass bei guter Porenbenetzung die vorhandene Luft aus den Poren verdrängt wird, so dass eine wesentliche Voraussetzung für eine blasenfreie Trocknung der nachfolgenden Beschichtung erreicht wird.

Weiterhin zeigt der erfindungsgemäße Isoliergrund die gewünschte sperrende Wirkung gegenüber störenden Holzinhaltsstoffen, so dass diese für die nachfolgende Beschichtung keine negative Wirkung entfalten können.

Der Isoliergrund zeichnet sich darüber hinaus durch eine schnelle physikalische Antrocknung der Oberfläche aus. Eine staubtrockene Oberfläche wird nach 5 bis 55 Minuten bei 21°C und einer Auftragsmenge von 50 bis 60 g/m², bevorzugt bereits nach 10 bis 40 Minuten und besonders bevorzugt nach 15 bis 25 Minuten, erreicht.

Ein gleichmäßiger Lackfilmauftrag wird vorzugsweise mittels einer Spritzapplikation erreicht, wobei vorzugsweise 50 bis 60g/m² appliziert werden. Damit weist das Mittel ein Überlackierfester von 1 bis 36 Stunden, vorzugsweise von 3 bis 24 Stunden, bei 20 bis 23 °C und 45 bis 65 % relativer Luftfeuchtigkeit auf.

Vorzugsweise weist das Mittel zwischen 3 und 50 Gew.%, vorzugsweise zwischen 8 und 30 Gew.%, besonders bevorzugt zwischen 10 und 20 Gew.%, der isocyanathaltigen Verbindung(en) auf.

Um die Lichtbeständigkeit zu erhöhen, die gewünschte Viskosität einzustellen und/oder die Reaktionskinetik zu beeinflussen, kann das Mittel mehrere erfindungsgemäße isocyanathaltige Verbindungen der obigen Summenformel oder eine erfindungsgemäße isocyanathaltige Verbindung zusammen mit anderen isocyanathaltigen Verbindungen wie z.B. den Polyisocyanuraten des Toluylendiisocyanats oder den Polyisocyanuraten mit aliphatischen und aromatischen NCO-Gruppen umfassen.

Sofern die Verarbeitungstemperatur an die Viskosität des Isocyanats der obigen Summenformel angepasst wird, d.h. eine Verarbeitung zum Beispiel bei höheren Temperaturen erfolgt, ist es unter Umständen sogar möglich, das Isocyanat in Form von Reinsubstanz als Isoliergrund einzusetzen.

In den meisten Fällen ist es jedoch zur besseren Verarbeitung vorteilhaft, dass das Mittel neben der isocyanathaltigen Verbindung noch Lösungsmittel umfaßt. Der Anteil an Lösungsmittel richtet sich u.a. nach der Viskosität des Isocyanats und der gewünschten Verarbeitungsweise und beträgt im allgemeinen zwischen 20 Gew.% und 97 Gew.%, insbesondere zwischen 50 Gew.% und 90 Gew.%.

Als Lösungsmittel können Ester, Ketone oder aromatisch oder aliphatische Kohlenwasserstoffe eingesetzt werden.

Besonders bevorzugte Lösungsmittel sind Alkylester wie 1-Methyloxypropylacetat, Ethylacetat oder Butylacetat.

Vorzugsweise weisen die Lösungsmittel Verdunstungszahlen von mehr als 33 auf, um ein "Weißanlaufen" durch die Verdunstungskälte zu vermeiden.

In der Regel beträgt die Viskosität des Mittels zwischen 2 und 200 m Pas (DIN 53015). Selbstverständlich ist die Viskosität des Mittels an die gewünschte Applikation anzupassen.

Der NCO-Gehalt des Mittels liegt vorzugsweise zwischen 1 und 30 Gew.%, besonders bevorzugt zwischen 2 und 6 Gew.%.

Falls gewünscht, kann das Mittel weitere Zusätze wie Lichtschutz, vorzugsweise in einem Anteil von 0 bis 5 Gew.%, insbesondere zwischen 0 und 1 Gew.%, enthalten.

Das oben beschriebene erfindungsgemäße Mittel kann als 1-Komponenten-Isoliergrund eingesetzt werden.

Nach dem Auftragen des 1K-Isoliergrundes findet unter anderem durch Reaktionen mit Hydroxigruppen oder aciden Wasserstoffen an der Oberfläche des Werkstücks eine Vernetzung statt. Der vernetzte Isoliergrund bindet an die Holzoberfläche und verhindert ein Austreten von Holz- und Farbstoffen aus der Holzoberfläche. Gleichzeitig schützt der Isoliergrund das Holz, und zwar auch bei Temperaturen von 260°C. Dies ist voraussichtlich darauf zurückzuführen, daß die erfindungsgemäßen isocyanathaltigen Phosphorsäureester bzw. Derivate sich im vernetzten Zustand auch bei höheren Temperaturen nicht von der Holzoberfläche ablösen.

Beim Einsatz des erfindungsgemäßen Mittels als 1K-Isoliergrund weist der aufgetragene Isoliergrund im Allgemeinen noch eine gewisse Restklebrigkeit auf, da nicht alle Isocyanatgruppen vollständig reagiert haben. Dies ist jedoch insbesondere bei dem nachfolgenden Aufbringen einer PU-Beschichtung mittels RIM oder bei anschließendem Hinter- und Überspritzen für die Haftungseigenschaften sogar gewünscht, da die freien Isocyanatgruppen eine hervorragende Haftvermittlung zu der anschließend aufgebrachten Lack- oder Kunststoffbeschichtung bewirken. Insbesondere werden bei dem RIM und dem Hinter- und Überspritzverfahren keine Lösemittel in der aufgebrachten Lack- oder Kunststoffschicht eingesetzt, die den noch nicht vollständig ausgehärteten Isoliergrund anlösen könnten.

Sofern infolge der Verarbeitungsbedingungen und der Art der späteren Beschichtung (z.B. Polyesterlack mit Lösungsmitteln, staubhaltige Atmosphäre oder Schleifen des aufgebrachten Isoliergrunds erforderlich) ein schnelleres physikalisches Antrocknen der Isoliergrundschicht gewünscht ist, kann dies durch ein Abmischen des erfindungsgemäßen Mittels mit physikalisch trocknenden Bindemitteln wie Polyvinylchlorid Copolymeren oder CAB, gegebenenfalls auch Nitrocellulose, erreicht werden.

Alternativ ist möglich, eine zweite OH-haltige Komponente vorzusehen, die vor dem Auftragen mit dem erfindungsgemäßen Mittel gemischt wird und für eine stärkere und schnellere Vernetzung des Isoliergrundes sorgt. In dieser Ausführungsform ist das erfindungsgemäße Mittel die Härterkomponente eines 2K-Isoliergrunds, und die zweite Komponente umfaßt OH-Gruppen. Bei dieser an sich bekannten OH-haltigen Komponente kann es sich beispielsweise um Hydroxiacrylate oder Polyesterpolyole handeln.

Das Verhältnis zwischen der zweiten OH-haltigen Komponente und dem erfindungsgemäßen isocyanathaltigen Mittel OH : OCN kann zwischen 0 : 1 und 3:1 betragen, je nachdem, ob und in welchem Maße der Vernetzungsgrad durch zusätzliche OH-Gruppen gesteigert werden soll.

In einer weiteren Ausführungsform kann die zweite Komponente sowohl physikalisch trocknende Bindemittel als auch eine oder mehrere OHhaltige Komponenten in der Abmischung erhalten.

Falls gewünscht, können dieser zweiten Komponente zusätzlich .Entschäumer, beispielsweise auf der Basis der polyethermodifizierten Polysiloxane, Lichtschutzmittel auf der Basis von Benzotriazol oder auch als HALS-Radikalfänger, zugesetzt werden. Ist die zweite Komponente OHhaltig, so können überdies Beschleuniger, beispielsweise aminische Beschleuniger oder Beschleuniger auf der Basis metallorganischer Verbindungen, zugesetzt werden.

Unabhängig davon, ob das erfindungsgemäße, die isocyanathaltigen Phosphorsäureester oder dessen Derivate umfassende Isoliergrundierungsmittel als solches oder in Abmischungen mit physikalisch trocknenden Bindemitteln und/oder einer zweiten OH-haltigen Komponente in anwendungstechnisch sinnvollen Grenzen als Isoliergrund eingesetzt wird, wird eine erstaunlich gute Haftung des Isoliergrunds auf dem Holz und Haftvermittlung zu der auf dem Isoliergrund aufzubringenden Lackoder Kunststoffschicht erreicht, wobei die Haftung und Haftvermittlung selbst bei den im Herstellungsprozess geforderten hohen Temperaturen von bis zu 290° C und den erforderlichen Applikationszeiten nicht verloren gehen. Zudem zeigen die mit dem erfindungsgemäßen Isoliergrund behandelten Hölzer auch bei höheren Temperaturen über eine längere Zeitdauer keine Verfärbung.

Die vorliegende Erfindung betrifft auch die Verwendung des Isoliergrunds zur Haftvermittlung zwischen Kunststoff und Holz, die Verwendung des Mittels für die anschließende Beschichtung mit Kunststoffen bei Temperaturen über 100 °C, vorzugsweise über 130 °C und insbesondere bei Temperaturen von mehr als 240 °C sowie die Verwendung des Isolisergrunds für ein anschließendes Hinter- und Überspritzen oder zur Beschichtung in einer Hochdruckreaktionsgießmaschine.

Nachdem der erfindungsgemäße Isoliergrund auch über eine längere Zeitdauer bei hohen Temperaturen einsetzbar ist, ist er für die verschiedensten Verfahren anwendbar, u.a. auch für die spätere Beschichtung mit Thermoplasten durch Hinter- und Überspritzen, bei der Holz und Isoliergrund kurzzeitig außerordentlich hohen Temperaturen von mehr als 240° C und bis zu 290° C ausgesetzt werden.

Der erfindungsgemäße Isoliergrund eignet sich insbesondere als Isoliergrund für kunststoffumspritzte Holzteile für die Automobilindustrie.

Die vorliegende Erfindung wird nachfolgend anhand von Ausführungsbeispielen beschrieben.

### 1. Rezeptur des 1-Komponenten-Mittels

13,5 Gew.% Tris(p-isocyanatophenyl)thiophosphat
85,5 Gew.% Butylacetat
1 Gew. % UV-Absorber

Der niedrigviskose Isoliergrund zeichnet sich durch eine sehr gute Porenbenetzung aus. Aufgrund der ausgezeichneten Penetrationsneigung, ausgeprägter Haftfestigkeit und der guten absperrenden Wirkung gegen Holzinhaltsstoffe ist der Isoliergrund, im Gegensatz zu konventionellen Mitteln, auch für die Beschichtung von tropischen Holzarten geeignet.

Der Isoliergrund schützt das Holz vor einer frühzeitigen Gelbverfärbung durch UV-Einfluss und ist nach 20 bis 30 min bei 21° C und einer Auftragsmenge von 50 bis 60 g/m² staubtrocken.

Im Vergleich zu anderen Isoliergründen, die dem derzeitigen Stand der Technik entsprechen, behält das Mittel auch unter Einfluss höherer Temperaturen ein sehr gutes Haftungsprofil.

### 2. Rezeptur eines 2-Komponenten-Mittels mit einer Bindemittelabmischung

### a) NCO-haltiges Mittel

15 Gew.% Tris(p-isocyanatophenyl)thiophosphat
45 Gew.% 1-Methoxypropylacetat
39 Gew.% Ethylacetat
1 Gew.% UV-Absorber

### b) Bindemittelhaltige Komponente

10 Gew.% Polyvinylchlorid-Copolymer
90 Gew.% Butylacetat

Durch die Verwendung einer zweiten bindemittelhaltigen Komponente auf Basis Polyvinylchlorid beschleunigt sich einerseits die Antrocknungsgeschwindigkeit und andererseits erhöht sich dadurch der Temperaturbereich unter Beibehaltung der Haftungseigenschaften, mit dem der grundierte Träger weiterverarbeitet werden kann.

Eine staubtrockene Oberfläche wird mit diesem 2K-System nach 15 bis 25 min bei 21° C und einer Auftragsmenge von 50 bis 60 g/m² erreicht.

Die anderen oben beschriebenen positiven Eigenschaften des 1K-Mitterls bleiben erhalten.

### 3. Rezeptur eines 2K-Mittels mit OH-haltigen Komponenten

### a) NCO-haltiges Mittel

15 Gew.% Tris(p-isocyanatophenyl)thiophosphat
45 Gew.% 1-Methoxypropylacetat
39 Gew.% Ethylacetat
1 Gew.% UV-Absorber

### b) OH-haltige Komponente

20 Gew.% gesättigtes Hydroxiacrylat
80 Gew.% Butylacetat

Durch die Verwendung einer zweiten OH-haltigen Komponente reduziert sich einerseits die Antrocknungsgeschwindigkeit nochmals stärker und andererseits kann dadurch die Haftung zu besonders schwer zu benetzenden Untergründen erhöht werden.

Eine staubtrockene Oberfläche wird mit diesem System bereits nach 10 bis 20 min bei 21° C und einer Auftragsmenge von 50 bis 60 g/m² erreicht.

Auch hier bleiben die anderen, oben beschriebenen positiven Eigenschaften des 1K-Mittels erhalten.

### 4. Herstellung eines kunststoffumspritzten Holzteils mittels des 1K-Isoliergrunds

Der erfindungsgemäße Isoliergrund gemäß Rezeptur 1 wird auf ein gebeiztes und gegebenenfalls ein durch Querverleimung, Zwischenfurnier oder Metallschichten stabilisiertes Furnier aufgebracht und getrocknet.

Anschließend wird das so behandelte Furnier einer Formpressung unterzogen: Das behandelte Furnier wird in eine Form gelegt, gepreßt und mit einem Thermoplast (zum Beispiel ABS (Acrylbutadienstyrol), Polycarbonat oder auch Polyamid) bei einer Temperatur von circa 140° C bis 160° C hinterspritzt. Falls gewünscht, können die Thermoplaste als Zusätze Glasfasern oder Streckmittel umfassen. Anschließend wird bei einer Temperatur von etwa 270° C je nach verwendetem Thermoplast überspritzt, wobei zum Überspritzen Thermoplaste aus der Gruppe der Polymethacrylmethacrylate (PMMA), Styrolacrylnitril (SAN), Polycarbonat ausgewählt werden.

Das erhaltene kunststoffumspritzte Furnier zeigt eine dauerhafte Haftung des Kunststoffs an der Holzoberfläche, und die Holzoberfläche zeigt eine nur geringe Verfärbung.

### 5. Herstellung eines kunststoffumspritzten Holzteils mittels des 2K-Isoliergrunds

Die Herstellung erfolgte gemäß dem oben unter 4. beschriebenen Verfahren, wobei jedoch der 2K-Isoliergrund gemäß Rezeptur 2 oder 3 verwendet wurde und das NCO-haltige Mittel und die Bindemittel oder OH-haltige Komponente vor dem Auftagen gemischt wurden.

## Patentansprüche

1. Verwendung eines Mittels, das wenigstens einen isocyanathaltigen Ester der Phosphorsäure oder eines Phosphorsäurederivats, insbesondere eines Thiophosphats, umfasst als Isoliergrundierungsmittel für Holz, Holzwerkstoffe und Furniere, wobei das applizierte Mittel nach 5 bis 55 Minuten bei 21 °C bei einer Auftragsmenge von 50 bis 60 g/m² staubtrocken ist
a) für die anschließende Beschichtung mit Kunststoffen bei Temperaturen über 100 °C oder
b) für ein anschließendes Hinter- und Überspritzen oder zur Beschichtung in einer Hochdruckreaktionsgießmaschine.

2. Verwendung nach Anspruch 1, **dadurch gekennzeichnet, dass** der isocyanathaltige Ester der Phosphorsäure oder des Phosphorsäurederivats eine Verbindung der Summenformel
[(NCO)ₘ-R-O]ₙ-POₚS_{q}
ist, wobei R eine Aryl-, Alkyl- oder Arylalkylgruppe, ggf. substituiert und n, m, p und q eine ganze Zahl zwischen 0 und 4 ist.

3. Verwendung nach Anspruch 2, **dadurch gekennzeichnet, dass** die Arylgruppe eine Phenyl- oder Naphthylgruppe ist und die Alkyfgruppe aus der Gruppe der unverzweigten und verzweigten C1 bis C10-Alkyle und die Alkylarylgruppe aus den Alkylphenylgruppen mit Alkyl = C1 bis C10 wie z.B. Toluyl-, ausgewählt wird.

4. Verwendung nach einem der Ansprüche 1 bis 3, **dadurch gekennzeichnet, dass** das Mittel zwischen 3 und 50 Gew.%, vorzugsweise zwischen 8 und 30 Gew.%, besonders bevorzugt zwischen 10 und 20 Gew.%, des/der isocyanathaltigen Ester umfasst.

5. Verwendung nach einem der Ansprüche 1 bis 4, **dadurch gekennzeichnet, dass** das Mittel zusätzlich ein organisches Lösungsmittel, vorzugsweise aus der Gruppe der Ester, Ketone und aliphatischen und aromatischen Kohlenwasserstoffe, umfasst, wobei das Lösungsmittel vorzugsweise ein Alkylester, insbesondere 1-Methyloxypropylacetat, Ethylacetat oder Butylacetat ist.

6. Verwendung nach Anspruch 5, **dadurch gekennzeichnet, dass** der Anteil an Lösungsmittel in dem Mittel zwischen 20 und 97 Gew. %, insbesondere zwischen 50 und 90 Gew.%, beträgt.

7. Verwendung nach einem der Ansprüche 1 bis 6, **dadurch gekennzeichnet, dass** das Mittel ein 1-Komponenten-Mittel ist.

8. Verwendung nach einem der Ansprüche 1 bis 6, **dadurch gekennzeichnet, dass** das Mittel ein 2-Komponenten-Mittel ist und die zweite Komponente zusätzlich wenigstens eine OH-haltige Verbindung und/oder ein physikalisch trocknendes Bindemittel umfasst, wobei die OH-haltige Verbindung vorzugsweise aus der Gruppe der Hydroxyacrylate und Polyesterpolyole und/oder das physikalisch trocknende Bindemittel vorzugsweise aus der Gruppe der Polyvinylchlorid Copolymere, CAB oder Nitrocellulose ausgewählt wird.

9. Verwendung nach Anspruch 8, **dadurch kennzeichnet, dass** das Verhältnis der OH-haltigen Komponente und des isocyanathaltigen Mittels zwischen 0 : 1 und 3 : 1 beträgt.

10. Verwendung nach einem der Ansprüche 1 bis 9 zur Haftvermittlung zwischen Kunststoff und Holz.

11. Verwendung nach einem der vorangehenden Ansprüche für die anschließende Beschichtung mit Kunststoffen bei Temperaturen über 130°C und insbesondere bei Temperaturen von mehr als 240°C.

## Claims

1. Use, as insulation primer agent for wood and for wood-based materials and for veneers, of an agent which comprises at least one isocyanate-containing ester of phosphoric acid or of a phosphoric acid derivative, in particular of a thiophosphate, where the applied agent is dust dry after from 5 to 55 minutes at 21°C when the amount applied is from 50 to 60 g/m²
a) for subsequent coating with plastics at temperatures above 100°C or
b) for subsequent backinjection and overmoulding of the upper side or for coating in a highpressure reaction moulding machine.

2. Use according to Claim 1, **characterized in that** the isocyanate-containing ester of phosphoric acid or of the phosphoric acid derivative is a compound of the molecular formula
[(NCO)ₘ-R-O]ₙ-POₚS_{q}
where R is an aryl group, alkyl group or arylalkyl group, optionally substituted and n, m, p and q is an integer between 0 and 4.

3. Use according to Claim 2, **characterized in that** the aryl group is a phenyl group or naphthyl group and the alkyl group is selected from the group of the unbranched and branched C1 to C10-alkyls and the alkylaryl group is selected from the alkylphenyl groups where alkyl = C1 to C10, for example tolyl group.

4. Use according to any of Claims 1 to 3, **characterized in that** the agent comprises between 3 and 50% by weight, preferably between 8 and 30% by weight, particularly preferably between 10 and 20% by weight, of the isocyanate-containing ester(s).

5. Use according to any of Claims 1 to 4, **characterized in that** the agent also comprises an organic solvent, preferably from the group of the esters, ketones and aliphatic and aromatic hydrocarbons, where the solvent is preferably an alkyl ester, in particular 1-methyloxypropyl acetate, ethyl acetate or butyl acetate.

6. Use according to Claim 5, **characterized in that** the proportion of solvent in the agent is between 20 and 97% by weight, in particular between 50 and 90% by weight.

7. Use according to any of Claims 1 to 6, **characterized in that** the agent is a single-component agent.

8. Use according to any of Claims 1 to 6, **characterized in that** the agent is a two-component agent and the second component also comprises at least on OH-containing compound and/or one physically drying binder, where the OH-containing component is preferably selected from the group of the hydroxyacrylates and polyester polyols and/or the physically drying binder is preferably selected from the group of the polyvinyl chloride copolymers, CAB or nitrocellulose.

9. Use according to Claim 8, **characterized in that** the ratio of the OH-containing component and the isocyanate-containing agent is between 0 : 1 and 3 : 1.

10. Use according to any of Claims 1 to 9 for promoting adhesion between plastic and wood.

11. Use according to any of the preceding claims for subsequent coating with plastics at temperatures above 130°C and in particular at temperatures of more than 240°C.

## Revendications

1. Utilisation d'un agent qui comprend au moins un ester contenant isocyanate de l'acide phosphorique ou d'un dérivé d'acide phosphorique, en particulier d'un thiophosphate, comme apprêt d'isolation pour le bois, les matériaux à base de bois et les placages, l'agent appliqué étant sec hors poussière après 5 à 55 minutes à 21°C à une quantité appliquée de 50 à 60 g/m²
a) pour le revêtement consécutif par des matériaux synthétiques à des températures supérieures à 100°C ou
b) pour un moulage par injection et un surmoulage consécutifs ou en vue du revêtement dans une machine de coulée à réaction sous pression élevée.

2. Utilisation selon la revendication 1, **caractérisée en ce que** l'ester contenant isocyanate de l'acide phosphorique ou du dérivé de l'acide phosphorique est un composé de formule brute
[(NCO)ₘ-R-O]ₙ-POₚS_{q}
où R représente un groupe aryle, alkyle ou arylalkyle, le cas échéant substitué, et n, m, p et q valent un nombre entier entre 0 et 4.

3. Utilisation selon la revendication 2, **caractérisée en ce que** le groupe aryle est un groupe phényle ou naphtyle et le groupe alkyle est choisi dans le groupe des C₁-C₁₀-alkyles non ramifiés et ramifiés et le groupe alkylaryle parmi les groupes alkylphényle avec alkyle = C₁ à C₁₀, comme par exemple le groupe toluyle.

4. Utilisation selon l'une quelconque des revendications 1 à 3, **caractérisée en ce que** l'agent comprend entre 3 et 50% en poids, de préférence entre 8 et 30% en poids, de manière particulièrement préférée entre 10 et 20% en poids, de l'ester ou des esters contenant isocyanate.

5. Utilisation selon l'une quelconque des revendications 1 à 4, **caractérisée en ce que** l'agent comprend en plus un solvant organique, de préférence du groupe des esters, des cétones et des hydrocarbures aliphatiques et aromatiques, le solvant étant de préférence un ester alkylique, en particulier un acétate de 1-méthyloxypropyle, un acétate d'éthyle ou un acétate de butyle.

6. Utilisation selon la revendication 5, **caractérisée en ce que** la proportion de solvant vaut en moyenne entre 20 et 97% en poids, en particulier entre 50 et 90% en poids.

7. Utilisation selon l'une quelconque des revendications 1 à 6, **caractérisée en ce que** l'agent est un agent à 1 composant.

8. Utilisation selon l'une quelconque des revendications 1 à 6, **caractérisée en ce que** l'agent est un agent à 2 composants et le deuxième composant comprend en plus au moins un composé contenant OH et/ou un liant séchant physiquement, le composé contenant OH étant de préférence choisi dans le groupe des hydroxyacrylates et des polyesterpolyols et/ou le liant séchant physiquement étant de préférence choisi dans le groupe formé par les copolymères de poly(chlorure de vinyle), le CAB ou la nitrocellulose.

9. Utilisation selon la revendication 8, **caractérisée en ce que** le rapport du composant contenant OH et de l'agent contenant isocyanate vaut entre 0:1 et 3:1.

10. Utilisation selon l'une quelconque des revendications 1 à 9 pour la promotion de l'adhérence entre un matériau synthétique et le bois.

11. Utilisation selon l'une quelconque des revendications précédentes pour le revêtement consécutif avec des matériaux synthétiques à des températures supérieures à 130°C et en particulier à des températures supérieures à 240°C.
